# EUROPEAN PATENT APPLICATION

(11) **EP 3 726 395 A1**
(43) Date of publication of application: **21.10.2020**
(21) Application number: 18888164.3
(22) Date of filing: 25.10.2018
(51) Int. Cl.: G06F 16/00

(54) **VEHICLE-MOUNTED MUSIC MATCHING METHOD AND APPARATUS, AND VEHICLE-MOUNTED INTELLIGENT CONTROLLER**

(30) Priority: 15.12.2017 CN 201711355001
(71) Applicant: Nio Nextev Limited, Hong Kong (CN)
(72) Inventor: CHEN, Yingrui, Hong Kong (CN); LI, Tianshu, Hong Kong (CN); LI, Bin, Hong Kong (CN)
(74) Representative: Vossius & Partner Patentanwälte Rechtsanwälte mbB
(86) International application number: PCT/CN2018/111856
(87) International publication number: WO 2019/114426

(57) **Abstract**

A vehicle-mounted music matching method and a vehicle-mounted intelligent controller. The vehicle-mounted music matching method comprises: based on an acquired driving environment feature of a vehicle and/or emotion feature of a user (S1), matching music of a specific tag according to a preset music matching strategy (S2), and using the music obtained by matching the specific tag as music to be played, and pushing the music to the user (S3). The method can directly control the playing of vehicle-mounted music with voice without manual operations, thereby reducing the risk during travel, and can actively push music to a user, thereby improving the user experience.

## Description

### Technical Field

The invention relates to the technical field of vehicles, and in particular to a vehicle-mounted music matching method and apparatus and a vehicle-mounted intelligent controller.

### Background Art

With the development of vehicle technology, consumers no longer just focus on the performance of the vehicle itself, but begin to pay more and more attention to human-vehicle interaction experience during the driving process. As a part of a driving entertainment system, vehicle-mounted music is one of the functions that users use frequently in daily life, and it is also an important component of human-vehicle interaction experience.

In the prior art, the user needs to manually operate to play the vehicle-mounted music. When wanting to play music or change music during driving, the user needs to free up his or her hand to perform the corresponding operations, which poses a threat to driving safety to a certain extent. In addition, in the prior art, the music played by the user is often in the music list of the vehicle for a long time, which lacks freshness for the user. When the user's emotion changes due to driving conditions, surrounding environment, etc., the music being played may further have an adverse effect on the user's emotion, thereby affecting the user's driving experience to a certain extent.

Therefore, how to propose a solution to the above problems is a problem that those skilled in the art need to solve at present.

### Summary of the Invention

In order to solve the above problems in the prior art, that is, in order to solve the problems in the prior art that playing vehicle-mounted music requires manual operations and it is not possible to match appropriate music for the user according to the environment where the vehicle is located or the user's emotion, thus resulting in a poor user experience, an aspect of the invention provides a vehicle-mounted music matching method, comprising:
matching, based on an acquired driving environment feature of a vehicle and/or emotion feature of a user, music of a specific tag according to a preset music matching strategy, and using the music as music to be played.

In a preferred technical solution of the above-mentioned method, the preset music matching strategy comprises:
establishing a first mapping relationship between preset environment features and/or emotion features of the user and the music of the specific tag;
establishing a second mapping relationship between pre-acquired driving records of the vehicle and/or listening habits of the user and the music of the specific tag; and
using the first mapping relationship and/or the second mapping relationship as the preset music matching strategy.

In a preferred technical solution of the above-mentioned method, "matching music of a specific tag" comprises:
matching the music of the specific tag according to the driving environment feature of the vehicle and/or the emotion feature of the user, the first mapping relationship, and the second mapping relationship.

In a preferred technical solution of the above-mentioned method, the driving environment feature of the vehicle comprises: a traffic condition and/or an environmental location.

In a preferred technical solution of the above-mentioned method, acquiring the emotion feature of the user comprises:
acquiring, based on an acquired voice and/or expression of the user, the emotion feature of the user according to the voice and/or expression of the user.

In a preferred technical solution of the above-mentioned method, the specific tag comprises: music category and/or music rhythm.

In a preferred technical solution of the above-mentioned method, the method further comprises:
matching music corresponding to the specific tag from an online and/or a local music library according to the specific tag, and using the music as the music to be played; and
pushing the music to be played to the user in the manner of text displaying and/or voice broadcasting.

Another aspect of the invention provides a vehicle-mounted intelligent controller, comprising:
an acquiring module configured to acquire a driving environment feature of a vehicle and/or an emotion feature of a user; and
a matching module configured to match music of a specific tag according to a preset music matching strategy, and use the music as music to be played.

A third aspect of the invention provides a storage apparatus in which a plurality of programs are stored, wherein the programs are adapted to be loaded and executed by a processor to implement the above-mentioned vehicle-mounted music matching method.

A fourth aspect of the invention provides a processing apparatus, comprising a processor and a storage device; the processor being adapted to execute various programs; and the storage device being adapted to store a plurality of programs, wherein the programs are adapted to be loaded and executed by the processor to implement the above-mentioned vehicle-mounted music matching method.

Compared with the closest prior art, the invention provides a vehicle-mounted music matching method, comprising: matching, based on an acquired driving environment feature of a vehicle and/or emotion feature of a user, music of a specific tag according to a preset music matching strategy, and using the music as music to be played.

The above technical solutions have at least the following beneficial effects: The method of the invention allows the user to directly control the playing of the vehicle-mounted music or change the music with voice during driving without manual operation, which reduces the driving risk. In addition, the method of the invention can also push corresponding music to the user according to the environment where the vehicle is located, the user's emotion and the user's listening habits, thus not only soothing the user's emotion, but also allowing the user to feel intimacy and freshness, thereby improving user experience.

### Brief Description of the Drawings

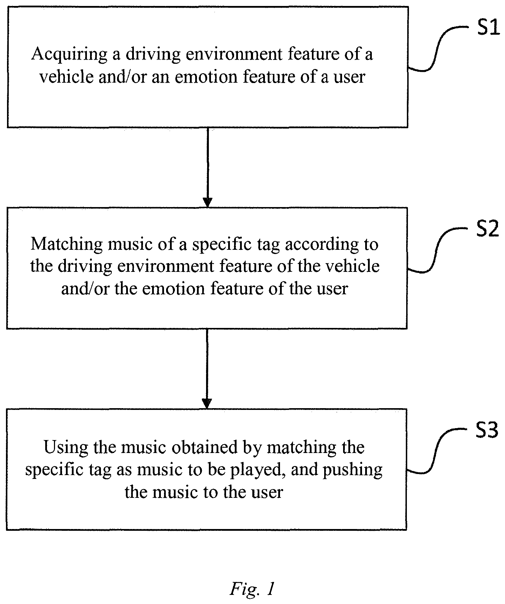

Fig. 1 is a schematic flowchart of a vehicle-mounted music matching method in an embodiment of the invention.

### Detailed Description of Embodiments

To make the objectives, technical solutions, and advantages of the embodiments of the invention clearer, the technical solutions in the embodiments of the invention will be described clearly and completely with reference to the accompanying drawings in the embodiments of the invention. Obviously, the described embodiments are only some, rather than all of the embodiments of the invention. Based on the embodiments of the invention, all other embodiments obtained by those of ordinary skills in the art without going through any creative work shall fall within the scope of protection of the invention

Preferred implementations of the invention are described below with reference to the accompanying drawings. It should be understood by those skilled in the art that these implementations are only for explaining the technical principles of the invention and are not intended to limit the scope of protection of the invention.

Referring to Fig. 1, Fig. 1 exemplarily shows a schematic flowchart of a vehicle-mounted music matching method in an embodiment of the invention. As shown in Fig. 1, an aspect of the invention provides a vehicle-mounted music matching method which comprises the following steps:

Step S1: acquiring a driving environment feature of a vehicle and/or an emotion feature of a user.

In this embodiment, the vehicle-mounted music matching method runs in a vehicle-mounted intelligent controller. The vehicle-mounted intelligent controller has a rotatable head, and the head is provided with a display screen on which text and expression information can be displayed. The vehicle-mounted intelligent controller is provided inside with a sensor and a voice receiving apparatus, which can be used to observe the user's expression, receive the user's voice, and detect the environment where the vehicle is located, and acquire the driving environment feature of the vehicle and the emotion feature of the user. The user can directly control the vehicle-mounted intelligent controller with voice, and send an instruction for playing music to the vehicle-mounted intelligent controller. After receiving the user's voice, the vehicle-mounted intelligent controller plays the corresponding music.

In a preferred embodiment of the invention, the driving environment feature of the vehicle comprises a traffic condition, wherein the vehicle-mounted intelligent controller can acquire the traffic condition of the road where the vehicle is located by accessing navigation software of the vehicle itself or third-party navigation software, so as to obtain the traffic condition of the environment where the vehicle is located. The traffic condition can be directly obtained through a data interface of the navigation software, for example, according to data acquired by the navigation software, the traffic condition is classified into multiple levels, each level corresponding to a different driving speed of the vehicle. In the embodiment of the invention, in the situation where the road is not speed limited and the vehicle is not overspeed, when the driving speed of the vehicle is not less than 80 Km/h, the level of traffic condition is classified as level A; when the driving speed of the vehicle is not less than 60 Km/h, but less than 80 Km/h, the level of traffic condition is classified as level B; when the driving speed of the vehicle is not less than 40 Km/h, but less than 60 Km/h, the level of traffic condition is classified as level C; and when the driving speed of the vehicle is less than 40 Km/h, the level of traffic condition is classified as level D, wherein levels A-D may respectively correspond to from being smooth to being severely congested according to the actual road conditions. Particularly, the traffic condition can be a specific value or a value interval, which is not limited here.

After obtaining the traffic condition of the driving environment of the vehicle, taking as an example the case in which the traffic condition of the environment where the vehicle is located is being congested, in order to relieve the user's anxiety caused by congestion and waiting, the vehicle-mounted intelligent controller can select music that is of the light style or is able to appease the emotion from an online or a local music library and push same to the user, thereby improving the user's driving experience.

In another preferred embodiment of the invention, the driving environment feature of the vehicle further comprises an environmental location, wherein the vehicle-mounted intelligent controller can acquire the specific geographic location of the driving environment of the vehicle by accessing navigation software of the vehicle itself or third-party navigation software. In the embodiment of the invention, the vehicle-mounted intelligent controller may set special scenes marked in the navigation software or the map as music push trigger points, in combination with information such as scenic spots, roads, buildings, and regions marked in the navigation software or the map. The vehicle-mounted intelligent controller can acquire the driving records of the vehicle. Taking as an example the daily driving location of the user being Shanghai, after the vehicle-mounted intelligent controller detects that the vehicle travels to Tibet for the first time and acquires the song associated with Tibet as "Blue Lotus", the vehicle-mounted intelligent controller triggers a preset music push trigger point, and pushes this song to the user. Particularly, the environmental location may be a set music push trigger point, or may be an actual location related to a song, which is not limited here.

In a further embodiment of the invention, acquiring the emotion feature of the user may comprise:

acquiring, based on an acquired voice and/or expression of the user, the emotion feature of the user according to the voice and/or expression of the user.

Particularly, the vehicle-mounted intelligent controller is provided inside with a sensor and a voice receiving apparatus, which can be used to observe the user's expression, and receive the user's voice. The vehicle-mounted intelligent controller can acquire the user's expression or accept the user's voice or combine the two to determine the emotion feature of the user's current state. In specific applications, taking as an example the case in which the traffic condition is being congested, the vehicle-mounted intelligent controller monitors the user's expression in real time. If the vehicle-mounted intelligent controller detects that the user's expression reaches the condition of anxious expression, in order to relieve the user's anxiety caused by congestion and waiting, the vehicle-mounted intelligent controller can select music that is of the light style or is able to appease the anxiety from the online or local music library and push same to the user. If the user actively sends an instruction for playing music to the vehicle-mounted intelligent controller, the vehicle-mounted intelligent controller analyzes emotion information carried in the user's voice, and acquires the emotion feature of the user according to the emotion information carried in the user's voice, wherein the emotion feature of the user can be classified into happiness, anger, sorrow, and fear etc., according to psychology. In addition, those skilled in the art can set other emotion features according to their experience and ability, which is not limited here.

Step S2: matching music of a specific tag according to the driving environment feature of the vehicle and/or the emotion feature of the user.

In this embodiment, after obtaining the traffic condition and environmental location of the environment where the vehicle is located and obtaining the emotion feature of the user according to the user's voice and/or expression, music that can relieve the user's emotion and improve the driving experience in the corresponding situation is acquired according to the above parameters.

In a preferred embodiment of the invention, the music tag comprises music category and music rhythm. In order to find music corresponding to the actual scene and the user's emotion accurately and quickly, the music in the local music library stored in the vehicle can be tagged, or the music tag in a third-party music library can be acquired. In practical applications, the music tag may comprise music category and music rhythm. According to the music category, music can be classified into classical music, pop music, rock music and blues music, etc. According to the music rhythm, the music classified by the music category can be classified into light, sentimental, and lyrical, etc. After obtaining a clear music tag, relevant music can be accurately pushed for the user according to the driving environment feature of the vehicle and the emotion feature of the user, thereby relieving negative emotions caused by traffic, environment, and long-term driving, etc., and further improving the user's driving experience when he or she is pleasant.

In another preferred embodiment of the invention, the preset music matching strategy comprises:
establishing a first mapping relationship between preset environment features and/or emotion features of the user and the music of the specific tag;
establishing a second mapping relationship between pre-acquired driving records of the vehicle and/or listening habits of the user and the music of the specific tag; and
using the first mapping relationship and/or the second mapping relationship as the preset music matching strategy.

In order to better improve the user's driving experience, it is necessary to efficiently and accurately match appropriate music according to the existing parameters, according to the data that the vehicle-mounted intelligent controller can acquire. Particularly, mapping relationships may be established between preset environment features and/or user's emotion features and music tags, for example, when the traffic condition in the preset environment features is being congested, a mapping relationship is established between this traffic condition and music of which the music rhythm in the music tags is light music. For example, when the traffic condition of the vehicle is being congested, the vehicle-mounted intelligent controller matches music corresponding to this condition according to the music matching strategy, and pushes a soothing music "Slowly" to the user; and when the traffic condition of the vehicle is smooth driving, the vehicle-mounted intelligent controller pushes a light music "Run" to the user, and so on. In practical applications, if other parameters are not acquired or it is inconvenient to acquire other parameters, the corresponding music tags can be obtained through the mapping relationships according to the traffic conditions acquired by the vehicle-mounted intelligent controller, and then relevant music can be pushed to the user.

In the same way, it is also possible to establish mapping relationships between the environmental locations in the preset environment features and the music tags. For example, the vehicle-mounted intelligent controller retrieves music related to a place or region from the music library, for example, when the vehicle enters Chengdu for the first time, the vehicle-mounted intelligent controller pushes "Chengdu" to the user; and when the vehicle enters Beijing or scenic spots such as Chang'an Street for the first time, the vehicle-mounted intelligent controller pushes "Beijing, Beijing" to the user.

In a further embodiment of the invention, a mapping relationship is established between pre-acquired driving records of the vehicle and/or listening habits of the user and music tags. When establishing the mapping relationships between the environmental locations and the music tags and pushing music to the user, it is also necessary to refer to the driving records of the vehicle. If, after the mapping relationship is established between the environmental location and the music tag, the vehicle-mounted intelligent controller determines, according to the driving records of the vehicle, however, that the user often drives at the environmental location, it indicates that the user is familiar with this environmental location. In order to avoid the user getting bored because he or she hears the same songs multiple times when passing through this environmental location, music related to this environmental location is not pushed to the user every time. If, after the mapping relationship is established between the environmental location and the music tag, the number of times the vehicle travels to this environmental location in the driving records of the vehicle is less than a preset threshold number of times, the music related to this environmental location can be pushed to the user, wherein the value of the preset threshold number of times can be 3 or 5, and can also be set according to the experience of the engineer or the requirements of the customer, which is not limited here.

The vehicle-mounted intelligent controller can also acquire the user's listening history records, and obtain the user's listening habits according to the user's listening history records, and establish a mapping relationship between the user's listening habits and music tags. For example, if the percentage of the number of folk songs in the user's song list is large, mapping relationships can be established between the user's listening habits and tags such as folk and lyric in the music tags. In the case where other mapping relationships are invalid, the user's preferred music can be pushed to the user according to the user's listening habits, thereby improving the user experience.

Step S3: using the music obtained by matching the specific tag as music to be played, and pushing the music to the user.

In this embodiment, after obtaining the specific music tag, the vehicle-mounted intelligent controller pushes the music corresponding to the specific music tag to the user. In practical applications, the vehicle-mounted intelligent controller can establish a connection with a central control screen, and push music to the user in the manner of text displaying and/or voice broadcasting. Particularly, after the vehicle-mounted intelligent controller acquires the music corresponding to the music tag, but at this moment music playing is in progress, in order not to interrupt the music being played, the vehicle-mounted intelligent controller can display, by connecting to the central control screen, information about the music corresponding to the music tag on the screen, and after the current music playing ends, ask the user whether to play the music corresponding to the music tag, and perform the corresponding operation after the user confirms. The method according to the embodiment of the invention can not only push suitable music for the user, but also improve driving safety and user experience without disturbing the user's driving. In addition, when the vehicle is connected to the network, it is possible to choose one of the online music library or the local music library to push music to the user; and when the vehicle is not connected to the network, it is possible to push music to the user from the local music library.

In the embodiments of the invention, the central control screen in various embodiments of the present application is exemplarily a display screen of various functions such as information entertainment, navigation, weather, and mileage display or a combination thereof in the cab. In practical applications, the vehicle-mounted intelligent controller is not limited to being used only on vehicles, but can also be used in other scenarios besides vehicles. The vehicle-mounted intelligent controller can be fixedly installed at a position that the user can observe, or can be detachably installed at a position that the user can observe. A connection interface for the vehicle-mounted intelligent controller can be reserved at a position above the central control screen of the vehicle, the connection interface can be electrically or communicatively connected to the vehicle-mounted intelligent controller, and the vehicle-mounted intelligent controller can also be wirelessly connected to the vehicle, which are not limited here.

In addition, the vehicle-mounted intelligent controller can be placed in the vehicle as an independent apparatus or used in other scenarios besides vehicles. The vehicle-mounted intelligent controller may comprise a fixing apparatus, which can allow the vehicle-mounted intelligent controller to be fixed when the vehicle is traveling or the user is inconvenient to hold the vehicle-mounted intelligent controller, wherein the fixing apparatus can be provided inside with a circuit interface, which can be connected to the connection interface reserved in the vehicle. The vehicle-mounted intelligent controller can be detachably connected to the fixing apparatus, and exists independently of the fixing apparatus.

The steps of the method or algorithm described with reference to the embodiments disclosed herein may be implemented by hardware, a software module executed by a processor, or a combination of both. Software modules may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the technical field.

Another aspect of the invention provides a vehicle-mounted intelligent controller, comprising:
an acquiring module configured to acquire a driving environment feature of a vehicle and/or an emotion feature of a user; and
a matching module configured to match music of a specific tag as according to a preset music matching strategy, and use the music as music to be played.

It will be clearly understood by those skilled in the art that for the convenience and brevity of the description, for the specific working process and related description of the vehicle-mounted intelligent controller in the embodiments of the invention, reference may be made to the corresponding process in the afore-mentioned embodiments of the vehicle-mounted music matching method, and it has the same beneficial effects as the above-mentioned vehicle-mounted music matching method, and will not be repeated here.

A third aspect of the invention provides a storage apparatus in which a plurality of programs are stored, wherein the programs are adapted to be loaded and executed by a processor to implement the above-mentioned vehicle-mounted music matching method.

It will be clearly understood by those skilled in the art that for the convenience and brevity of the description, for the specific working process and related description of the storage apparatus in the embodiment of the invention, reference may be made to the corresponding process in the afore-mentioned embodiments of the vehicle-mounted music matching method, and it has the same beneficial effects as the above-mentioned vehicle-mounted music matching method, and will not be repeated here.

A fourth aspect of the invention provides a processing apparatus, comprising a processor and a storage device; the processor being adapted to execute various programs; and the storage device being adapted to store a plurality of programs, wherein the programs are adapted to be loaded and executed by the processor to implement the above-mentioned vehicle-mounted music matching method.

It will be clearly understood by those skilled in the art that for the convenience and brevity of the description, for the specific working process and related description of the processing apparatus in the embodiment of the invention, reference may be made to the corresponding process in the afore-mentioned embodiments of the vehicle-mounted music matching method, and it has the same beneficial effects as the above-mentioned vehicle-mounted music matching method, and will not be repeated here.

Those skilled in the art should be able to realize that the method steps of the various examples described with reference to the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution. Those skilled in the art can use different methods to implement the described functions for each particular application, but such implementation should not be considered to be beyond the scope of the invention.

Heretofore, the technical solutions of the invention have been described with reference to the preferred implementations shown in the accompanying drawings; however, those skilled in the art can readily understand that the scope of protection of the invention is obviously not limited to these particular implementations. Without departing from the principle of the invention, those skilled in the art may make equivalent modifications or substitutions to related technical features, and the technical solutions after these modifications or substitutions shall fall within the scope of protection of the invention.

## Claims

1. A vehicle-mounted music matching method, **characterized by** comprising:
matching, based on an acquired driving environment feature of a vehicle and/or emotion feature of a user, music of a specific tag according to a preset music matching strategy, and using the music as music to be played.

2. The method according to claim 1, **characterized in that** the preset music matching strategy comprises:
establishing a first mapping relationship between preset environment features and/or emotion features of the user and the music of the specific tag;
establishing a second mapping relationship between pre-acquired driving records of the vehicle and/or listening habits of the user and the music of the specific tag; and
using the first mapping relationship and/or the second mapping relationship as the preset music matching strategy.

3. The method according to claim 2, **characterized in that** "matching music of a specific tag" comprises:
matching the music of the specific tag according to the driving environment feature of the vehicle and/or the emotion feature of the user, the first mapping relationship, and the second mapping relationship.

4. The method according to claim 3, **characterized in that** the driving environment feature of the vehicle comprises: a traffic condition and/or an environmental location.

5. The method according to claim 4, **characterized in that** acquiring the emotion feature of the user comprises:
acquiring, based on an acquired voice and/or expression of the user, the emotion feature of the user according to the voice and/or expression of the user.

6. The method according to claim 5, **characterized in that** the specific tag comprises: music category and/or music rhythm.

7. The method according to any one of claims 1-6, **characterized in that** the method further comprises:
matching music corresponding to the specific tag from an online and/or a local music library according to the specific tag, and using the music as the music to be played; and
pushing the music to be played to the user in the manner of text displaying and/or voice broadcasting.

8. A vehicle-mounted intelligent controller, **characterized by** comprising:
an acquiring module configured to acquire a driving environment feature of a vehicle and/or an emotion feature of a user; and
a matching module configured to match music of a specific tag according to a preset music matching strategy, and use the music as music to be played.

9. A storage apparatus in which a plurality of programs are stored, **characterized in that** the programs are adapted to be loaded and executed by a processor to implement the vehicle-mounted music matching method according to any one of claims 1-7.

10. A processing apparatus, comprising a processor and a storage device; the processor being adapted to execute various programs; and the storage device being adapted to store a plurality of programs, **characterized in that** the programs are adapted to be loaded and executed by the processor to implement the vehicle-mounted music matching method according to any one of claims 1-7.
